# EUROPEAN PATENT APPLICATION

(11) **EP 4 560 260 A1**
(43) Date of publication of application: **28.05.2025**
(21) Application number: 23842643.1
(22) Date of filing: 17.04.2023
(51) Int. Cl.: G01C 3/06, G01C 3/00

(54) **STEREO CAMERA DEVICE AND CALIBRATION METHOD**

(30) Priority: 22.07.2022 JP 2022116907
(71) Applicant: Hitachi Astemo, Ltd., Ibaraki 312-8503 (JP)
(72) Inventor: CHEN Cong, Tokyo 100-8280 (JP); YAMAZAKI Kazuyoshi, Tokyo 100-8280 (JP); BETSUI Keiichi, Tokyo 100-8280 (JP)
(74) Representative: Strehl & Partner mbB
(86) International application number: PCT/JP2023/015371
(87) International publication number: WO 2024/018709

(57) **Abstract**

A stereo camera device includes: a storage unit that stores correlation information of a parallax error in a horizontal direction with respect to a vertical shift of a plurality of images respectively captured by a plurality of cameras through a refractile body that refracts light; a matching unit that matches the plurality of images obtained by the plurality of cameras capturing a same subject to obtain a vertical shift of the plurality of images; a parallax error estimation unit that estimates a parallax error of the plurality of images having been matched based on the vertical shift and the correlation information; and a distance calculation unit that corrects, using the parallax error, a parallax of the image having been matched.

## Description

### Technical Field

The present invention relates to a stereo camera device and a calibration method.

### Background Art

Along with development of computer image technique, stereo cameras are being operated more widely. On the other hand, in recent years, along with artificial intelligence (AI) of automobiles, a technique for recognizing images captured using a stereo camera is widely used also for advanced driver assistance systems (ADAS) and autonomous driving. Unlike a normal camera, the stereo camera can achieve three-dimensional object recognition using images captured by the stereo camera. Three-dimensional object recognition is a technique in which images of the same object are acquired by two cameras installed apart from each other by a certain distance (baseline length), the distance from the two cameras to the object is calculated based on a parallax of the object by the principle of triangulation, and the image is made three-dimensional.

Known stereo cameras acquire distance information mainly to objects, thereby supporting a technique in which a vehicle avoids an object in front of the vehicle. This technique is used mainly when an automobile travels straight, and the vehicle can avoid an object ahead. However, as the safety standards increase, there is also a demand for a technique of detecting and avoiding pedestrians and bicycles at an intersection before the vehicle enters the intersection.

In order for a vehicle to avoid pedestrians and bicycles at an intersection, an angle of view wider than that of known stereo cameras for ADAS is required. On the other hand, when the angle of view is increased using a wide-angle lens, distortion of a captured image increases. Therefore, if calibration for correcting image distortion is incomplete, pixel shift occurs in images captured by the left camera and the right camera included in the stereo camera. As a result, a problem occurs in processing of detecting an object by measuring the distance to the object appearing in an image, and the distance may be erroneously measured. Note that in the following description, pixel shift in a vertical direction of images captured by the left camera and the right camera is called "vertical shift". Pixel shift in a horizontal direction is called a "parallax error" because it affects parallax detection of the stereo camera.

In coping with such a wide angle of view, there are the following problems. That is, in a wide angle region, the incident angle on the windshield of a vehicle increases, and pixel shift due to the influence of refraction of the windshield, that is, a parallax increases. On the other hand, in known narrow angle stereo cameras, the incident angle on the windshield is small, and thus it is hardly necessary to consider pixel shift occurring in the windshield. For this reason, a calibration method of a parallax for a stereo camera having a wide angle of view that can capture an image of an outside through the windshield has been required.

As calibration methods for such a wide angle of view, techniques described in PTLs 1 and 2 below have been proposed.

With a problem that "the wider the angle of view is, the larger the parallax shift due to refraction of an optical path when passing through the windshield", PTL 1 describes that "correction parameters of parallax shift are put together as a function or a table for horizontal position in the angle of view, and are stored in a storage device as optical axis characteristics" and "an image is further corrected using optical axis characteristics obtained by aiming".

With a problem that "a windshield is different for each vehicle type, and therefore glass distortion thereof is also different for each vehicle type. When it is attempted to evaluate the influence of glass distortion on a captured image, it is necessary to perform actual traveling and simulation for all vehicle types, and there is a disadvantage that huge man-power or cost are required.", PTL 2 describes that "a plurality of geometric tables are combined, and geometric distortion between a stereo camera and each protective hood is removed or geometric distortion of different protective hoods is reproduced with geometric distortion correction data stored in each geometric table".

### Citation List

### Patent Literature

PTL 1: JP 2021-25868 A
PTL 2: JP 2017-62198 A

### Summary of Invention

### Technical Problem

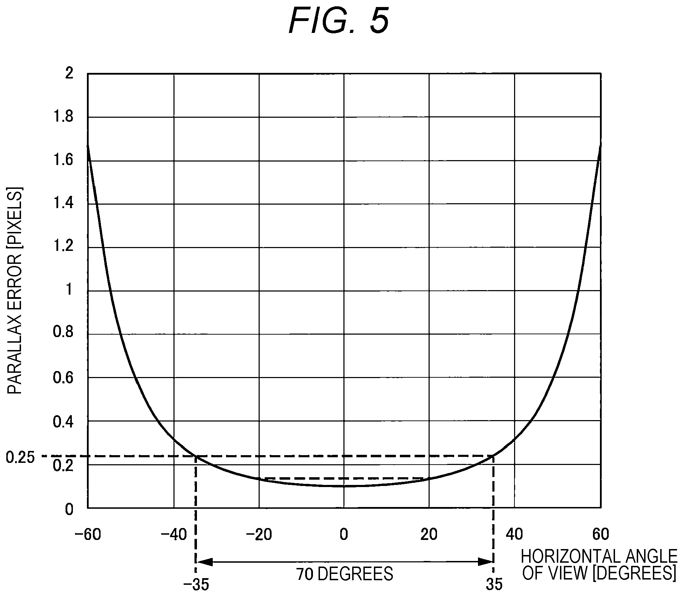

The technique for correcting an image based on the shape of a windshield (vehicle interior window) in design disclosed in PTL 1 is applicable as long as the shape of the windshield mounted on the vehicle is the same. However, in practice, the positional relationship between the windshield and the camera varies depending on installation positions of them. For this reason, the allowable value (e.g., a parallax error illustrated in FIG. 5 described later is within 0.25 pixels) cannot be satisfied when manufacturing variations of the curvature radius in the horizontal and vertical directions of the windshield and the thickness of the windshield, and variations in the relative relationship between the windshield and the mounting position of the stereo camera occur.

The technique disclosed in PTL 2 has a problem of widening the angle of the stereo camera. In this technique, an image is corrected using a calibration chart board (hereinafter, called a "chart"), but it is necessary to use a large chart along with the widening of the angle of the stereo camera.

The present invention has been made in view of the above problems, and an object thereof is to perform calibration for correcting the parallax of a stereo camera that captures an outside through a refractile body without using a chart.

### Solution to Problem

A stereo camera device according to the present invention includes: a storage unit that stores correlation information of a parallax error in a horizontal direction with respect to a vertical shift of a plurality of images respectively captured by a plurality of cameras through a refractile body that refracts light, the correlation information being obtained based on a refractile body characteristic including an attitude of the refractile body attached to a vehicle and a shape of the refractile body, and attitudes of the plurality of cameras arranged in the vehicle; a matching unit that matches the plurality of images obtained by the plurality of cameras capturing a same subject to obtain a vertical shift of the plurality of images; a parallax error estimation unit that estimates a parallax error of the plurality of images having been matched based on the vertical shift and the correlation information; and a distance calculation unit that corrects, using the parallax error, a parallax of the image having been matched.

### Advantageous Effects of Invention

According to the present invention, it is possible to perform calibration for correcting the parallax of a stereo camera that captures an outside through a refractile body without using a chart.

Problems, configurations, and effects other than those described above will be made clear by the description of the following embodiment.

### Brief Description of Drawings

[FIG. 1] FIG. 1 illustrates a relationship of a chart width with respect to an angle of view of a stereo camera.
[FIG. 2] FIG. 2 is an explanatory diagram illustrating an example in which a stereo camera according to one embodiment of the present invention.
[FIG. 3] FIG. 3 is a block diagram illustrating an overall configuration example of the stereo camera according to one embodiment of the present invention.
[FIG. 4] FIG. 4 is a block diagram illustrating a hardware configuration example of a computer according to one embodiment of the present invention.
[FIG. 5] FIG. 5 is a view illustrating an example of a simulation result of a parallax error calculated when a windshield is placed between the stereo camera according to one embodiment of the present invention and a subject.
[FIG. 6] FIG. 6 is a graph showing an example of a δ parallax error with respect to a horizontal angle of view of a stereo camera.
[FIG. 7] FIG. 7 is a flowchart showing an example of a calibration method according to one embodiment of the present invention.
[FIG. 8] FIG. 8 is a view illustrating an example of horizontal stereo matching of left and right images according to one embodiment of the present invention.
[FIG. 9] FIG. 9 is a view illustrating an example of vertical matching of left and right images according to one embodiment of the present invention.
[FIG. 10] FIG. 10 is a schematic diagram illustrating an example of a calculation procedure of a parallax error according to one embodiment of the present invention.
[FIG. 11] FIG. 11 is a configuration diagram of a correlation table according to one embodiment of the present invention.
[FIG. 12] FIG.12 is an explanatory diagram of a principle by which a parallax error estimation unit according to one embodiment of the present invention estimates a parallax error from a vertical shift.
[FIG. 13] FIG.13 is a view illustrating an example of nine types of variations according to one embodiment of the present invention.
[FIG. 14] FIG.14 is a view illustrating a correlation between a δ vertical shift and a δ parallax error according to one embodiment of the present invention.
[FIG. 15] FIG.15 is a view illustrating a simulation result of a residual value of a parallax error obtained for each of horizontal angles of view of 20 degrees, 40 degrees, and 60 degrees according to one embodiment of the present invention.

### Description of Embodiments

An embodiment for carrying out the present invention will be described below with reference to the accompanying drawings. When a plurality of components having substantially identical or similar functions exist in the present description and drawings, identical reference numerals are sometimes attached with different suffixes for explanations. When it is not necessary to distinguish among these components, the suffixes may be omitted in explanations.

The embodiment of the present invention described below is an example for explaining the present invention, and is omitted or simplified as appropriate for a clearer explanation. The present invention can be carried out also in various other forms. Unless otherwise specified, each component may be singular or plural.

The present invention can be applied to an arithmetic device for vehicle control with which an advanced driver assistance system (ADAS) or an in-vehicle electronic control unit (ECU) for autonomous driving (AD), for example, can communicate.

### [One Embodiment]

A stereo camera device and a calibration method according to one embodiment of the present invention are examples of the invention that solves the above-described problems. The content of the stereo camera device and the calibration method according to the present embodiment will be described below. Note that in the following description, correcting a parallax between two images is called "calibration".

The stereo camera is calibrated in four stages of (1) a manufacturing plant, (2) a vehicle plant, (3) a dealer, and (4) during traveling of the vehicle.

### (1) Calibration in Manufacturing Plant

When a stereo camera is manufactured in a manufacturing plant, optical axis adjustment of the stereo camera is performed in the manufacturing plant.

### (2) Calibration in Vehicle Plant

After the stereo camera is shipped from the manufacturing plant, the stereo camera is attached to a vehicle in a vehicle plant, and calibration is performed. The calibration performed in the vehicle plant is also called "aiming". Information such as a correction table obtained by aiming is stored in the stereo camera.

### (3) Calibration in Dealer

When the vehicle is sent to a dealer after the calibration in the vehicle plant is performed, dealer aiming is performed. The dealer aiming is performed after glass is replaced mainly at the time of repair of the vehicle.

### (4) Calibration during Traveling of Vehicle

Finally, calibration is performed during traveling of the vehicle. Calibration during traveling of the vehicle is called "automatic adjustment".

The calibration method according to the present embodiment is mainly used (3) at the time of dealer aiming and (4) during traveling of the vehicle. Since the dealer often has a small space for installing a device such as a chart, the calibration without a chart according to the present embodiment is desirable.

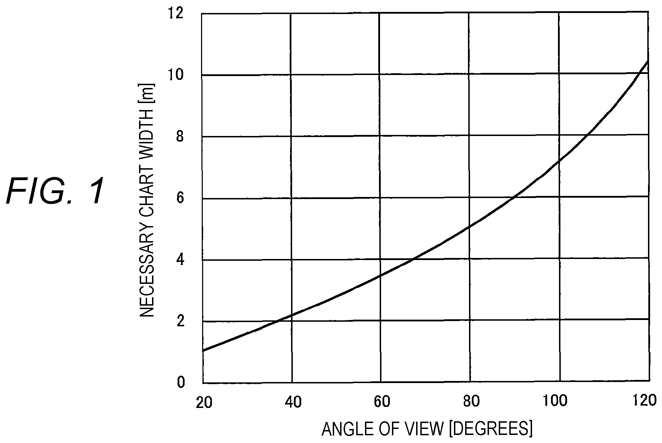

Here, the chart width of the chart used for calibration will be described with reference to FIG. 1.

FIG. 1 illustrates a relationship of a chart width with respect to an angle of view of a stereo camera. In FIG. 1, the horizontal axis represents the angle of view [degrees], and the vertical axis represents the necessary chart width [m]. Here, the distance between the stereo camera and the chart is 3 m. As illustrated in FIG. 1, for example, when the angle of view is 40 degrees, the necessary chart width may be about 2 m. On the other hand, when the angle of view is 120 degrees, the necessary chart width exceeds 10 m. Such a chart having a wide chart width is difficult to handle, and significant remodeling of a vehicle manufacturing plant and a dealer inspection plant has been required.

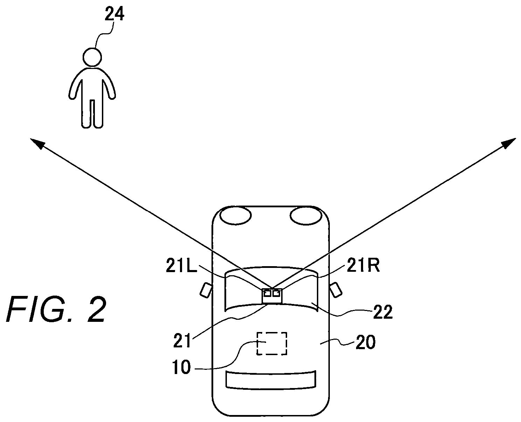

FIG. 2 is an explanatory diagram illustrating an example in which a stereo camera 21 captures an image of a subject 24.

The stereo camera 21 is mounted inside a windshield 22 (in a vehicle 20), and includes two cameras arranged side by side in the horizontal direction on the left and right sides. A refractile body (windshield 22) has a characteristic of refracting transmitted light, and may be either transparent or translucent. Of the two cameras constituting the stereo camera 21, the camera on the left side is called a left camera 21L, and the camera on the right side is called a right camera 21R. The left camera 21L and the right camera 21R may be abbreviated as "left and right cameras" and collectively called the stereo camera 21.

FIG. 2 represents a scene in which the stereo camera 21 detects the subject 24 via the windshield 22. FIG. 2 illustrates that the horizontal angle of view (about 120 degrees) of the stereo camera 21 is wider than the horizontal angle of view (about 40 degrees) of the known camera. Note that the left camera 21L and the right camera 21R can capture an image of the outside including the subject 24 at a horizontal angle of view of about 120 degrees.

The attitude of the windshield 22 attached to the vehicle (vehicle 20) is different for each vehicle type. Even in the identical vehicle type, the attitude of the windshield 22 attached to the vehicle (vehicle 20) may be slightly different.

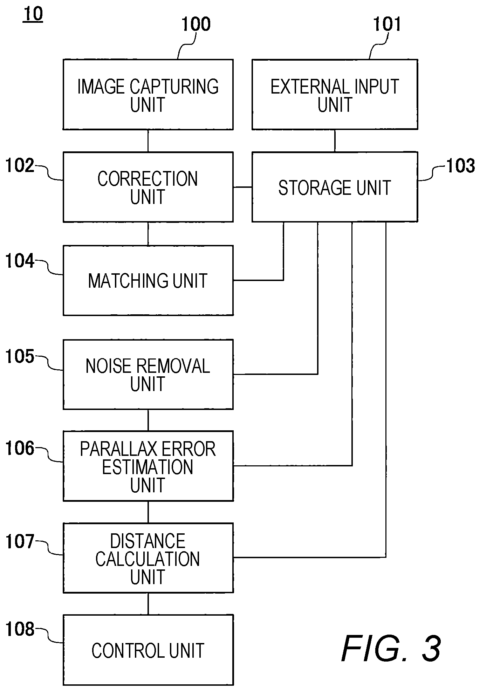

Next, a configuration example of a stereo camera device 10 according to one embodiment will be described with reference to FIG. 3**.**

FIG. 3 is a block diagram illustrating an overall configuration example of the stereo camera device 10 according to one embodiment.

The stereo camera device 10 includes an image capturing unit 100, an external input unit 101, a correction unit 102, a storage unit 103, a matching unit 104, a noise removal unit 105, a parallax error estimation unit 106, a distance calculation unit 107, and a control unit 108. The stereo camera device 10 may be configured as a part of an electronic control unit (ECU) mounted on a vehicle.

The image capturing unit 100 is connected to the correction unit 102. The image capturing unit (image capturing unit 100) acquires a plurality of images captured through a refractile body (windshield 22) respectively by a plurality of cameras (stereo cameras 21) arranged in the vehicle (vehicle 20). The image capturing unit 100 is a device that can acquire an image obtained by capturing an image of the outside of the vehicle, such as a visible light camera or an infrared camera, and includes a plurality of cameras arranged side by side in the horizontal direction. Therefore, the image capturing unit 100 may include not only a camera that can detect the outside through visible light, but also a camera that can detect the outside based on light rays other than visible light rays such as infrared light. However, the image capturing unit 100 is not limited to a visible light camera or an infrared camera. In this case, in place of the image capturing unit 100, an outside detection unit that can detect the outside with a light ray of a predetermined wavelength may be configured. The image capturing object (e.g., the subject 24) captured by the image capturing unit 100 may be a person, another vehicle, a landscape, a known calibration chart, or the like.

The image capturing unit 100 includes the left camera 21L and the right camera 21R (stereo camera 21) illustrated in FIG. 2. Then, the image capturing unit 100 outputs, to the correction unit 102, the left and right two images obtained by capturing a landscape in front of the vehicle. It is assumed that each pixel of the image indicates a luminance value. The image is not limited to an RGB image separated from a color image, and may be a monochrome image.

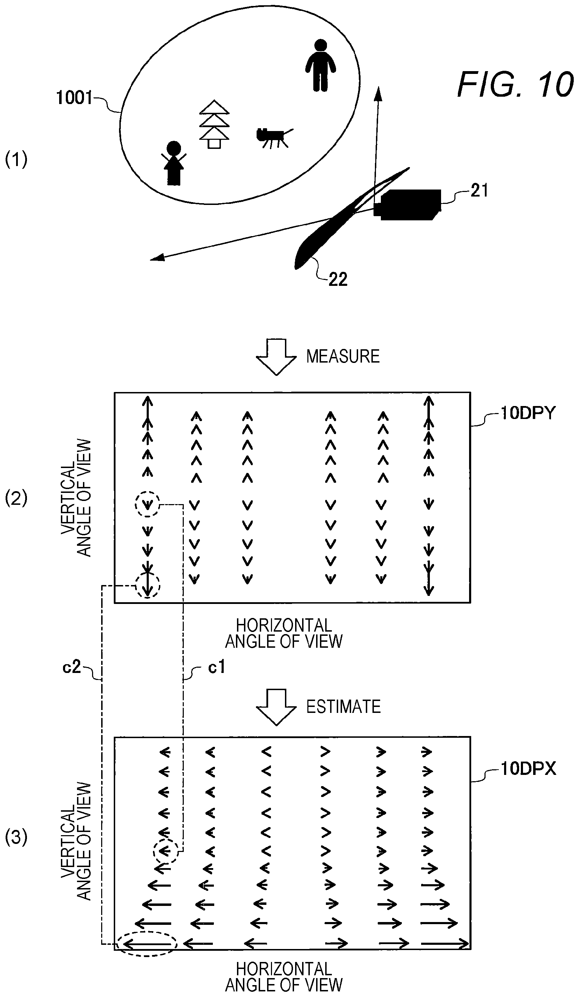

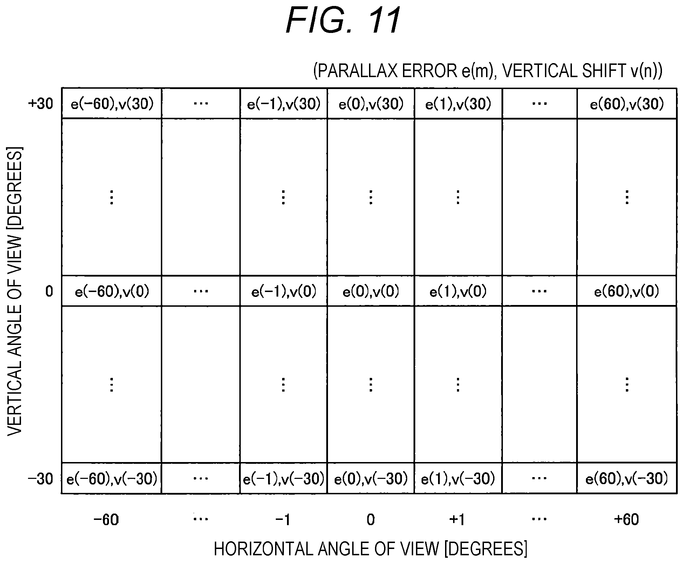

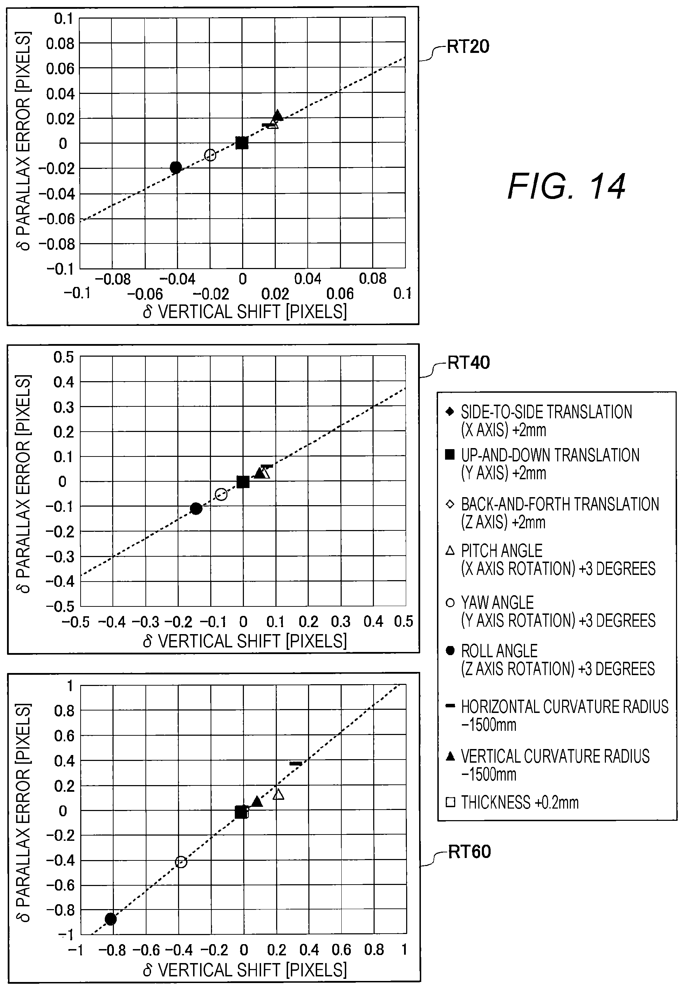

The external input unit 101 is connected to the storage unit 103. The external input unit 101 inputs and sends, to the storage unit 103, correlation information between a parallax error and a vertical shift of two images calculated in advance based on variations in the attachment attitude of the stereo camera 21 and design values such as the attachment attitude and shape of the windshield 22. In the storage unit 103, the correlation information between the parallax error and the vertical shift is saved as a correlation table illustrated in FIG. 11 described later. In the present description, the shift of an image in the horizontal direction is called a "parallax error". As the correlation information between the parallax error and the vertical shift, an image diagram is illustrated in FIG. 10 described later, and a proportional relationship is illustrated in FIG. 14 described later.

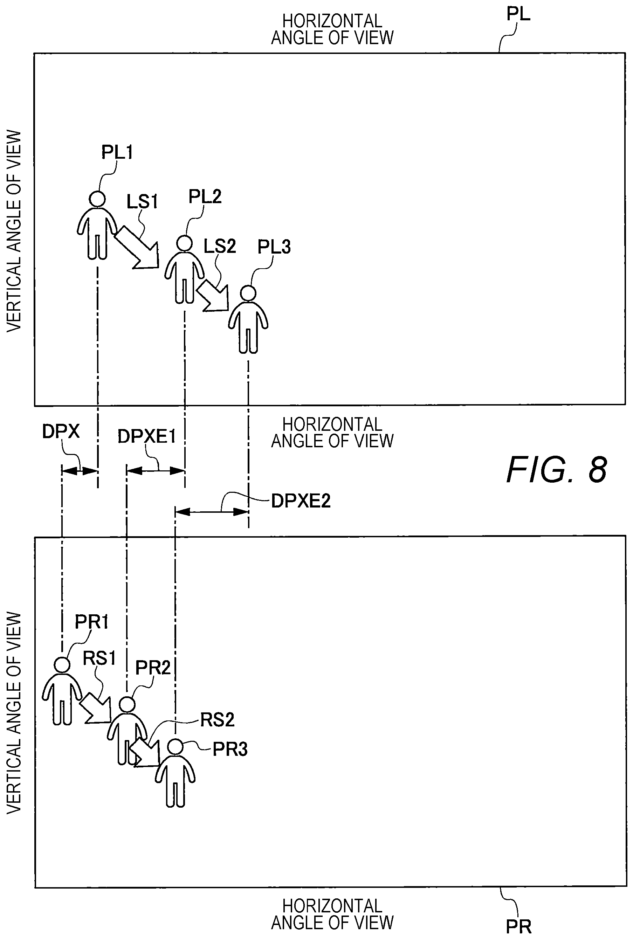

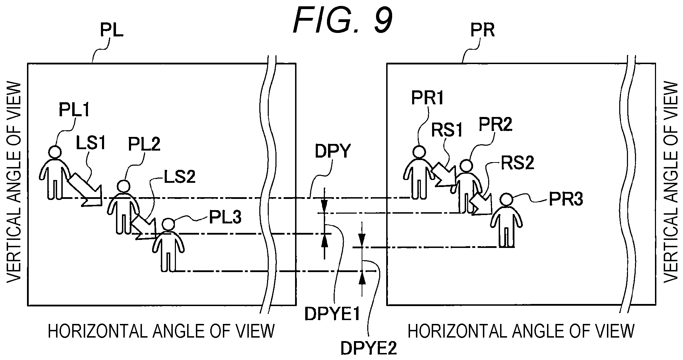

The external input unit 101 inputs and send, to the storage unit 103, a reference parallax error and a reference vertical shift calculated in advance by an external calculation device based on variations in the attachment attitude of the stereo camera 21 and design values such as the attachment attitude and shape of the windshield 22. Here, the reference parallax error and the reference vertical shift are values generated by refraction of the windshield 22 (design value), and are different from the correlation information of the parallax error and the vertical shift calculated from the attachment attitude, shape, and the like of the stereo camera 21 and the windshield 22 described above. The storage unit 103 saves the reference parallax error and the reference vertical shift. The reference parallax error and the reference vertical shift will be described later with reference to FIGS. 8 and 9.

The external input unit 101 inputs and sends, to the storage unit 103, the correction table obtained by the aiming in plant. The storage unit 103 saves the correction table obtained by the aiming in plant.

The correction unit 102 is connected to the image capturing unit 100, the storage unit 103, and the matching unit 104. The correction unit 102 corrects both the left and right images acquired from the image capturing unit 100 using the correction table read from the storage unit 103. The correction of the left and right images here is a process of correcting an influence of distortion of the respective lenses of the left camera 21L and the right camera 21R, and is not a process of correcting the parallax of the left and right images. Then, the correction unit 102 transmits the corrected left and right images to the matching unit 104.

The storage unit 103 is connected to the external input unit 101, the correction unit 102, the matching unit 104, the noise removal unit 105, the parallax error estimation unit 106, and the distance calculation unit 107. This storage unit 103 is a nonvolatile memory configured inside the stereo camera 21, and can store various types of information. For example, the storage unit (storage unit 103) stores a reference parallax error and a reference vertical shift calculated in advance based on a design value of the refractile body (windshield 22). The reference parallax error and the reference vertical shift are information input from the external input unit 101, and represent the parallax error and the vertical shift before the windshield 22 is attached to the vehicle 20. Then, the reference parallax error and the reference vertical shift are stored in the storage unit (storage unit 103) at the time of shipment of the plurality of cameras (stereo cameras 21).

The storage unit 103 stores the correction table input from the external input unit 101, and sends the correction table to the correction unit 102. The storage unit (storage unit 103) stores correlation information of a parallax error in a horizontal direction with respect to vertical shift of a plurality of images of the outside of the vehicle (vehicle 20) captured respectively by the plurality of cameras (left camera 21L and right camera 21R) through the refractile body (windshield 22) that refracts light. This correlation information is obtained based on the refractile body characteristics (characteristics of the windshield 22) including the attitude of the refractile body (windshield 22) attached to the vehicle (vehicle 20) and the shape of the refractile body (windshield 22), and the attitudes of a plurality of cameras (left camera 21L and right camera 21R) arranged in the vehicle (vehicle 20). The windshield 22 has refractile body characteristics (characteristics of the windshield 22) such as a horizontal curvature of the windshield 22, a vertical curvature of the windshield 22, and a thickness of the windshield 22.

The storage unit 103 stores the parallax and the vertical shift input from the matching unit 104. Here, the storage unit 103 transmits, to the noise removal unit 105, the vertical shift of a plurality of frames input from the matching unit 104 by a plurality of times of processing. The storage unit 103 also transmits correlation information between the vertical shift and the parallax error to the parallax error estimation unit 106. The storage unit 103 transmits, to the distance calculation unit 107, the parallax input from the matching unit 104.

Note that the reference parallax error and the reference vertical shift may be stored in the storage unit (storage unit 103) before the refractile body (windshield 22) is attached to the vehicle (vehicle 20). In this case, the change amount with respect to the reference parallax error after the refractile body (windshield 22) is actually attached to the vehicle (vehicle 20) is a δ parallax error, and the change amount with respect to the reference vertical shift is a δ vertical shift.

The matching unit 104 is connected to the correction unit 102 and the storage unit 103. The matching unit (matching unit 104) obtains a vertical shift of the plurality of images by matching the plurality of images obtained by the plurality of cameras (stereo cameras 21) capturing the same subject. For example, the matching unit 104 acquires the corrected left and right images from the correction unit 102, performs matching of the left and right images, and calculates the parallax and the vertical shift. The matching unit 104 transmits the calculated parallax and vertical shift to the storage unit 103, and saves the parallax and vertical shift in the storage unit 103.

The noise removal unit 105 is connected to the storage unit 103 and the parallax error estimation unit 106. The noise removal unit 105 takes a mean value of the vertical shift of the plurality of frames read from the storage unit 103. Next, using a filter, the noise removal unit 105 removes an invalid vertical shift mixed as noise from the calculation of the mean value, and transmits the mean value of the vertical shift to the parallax error estimation unit 106. Note that if noise removal is unnecessary, the stereo camera device 10 need not be provided with the noise removal unit 105.

The parallax error estimation unit 106 is connected to the storage unit 103, the noise removal unit 105, and the distance calculation unit 107. The parallax error estimation unit (parallax error estimation unit 106) estimates parallax errors of the plurality of images having been matched, based on the vertical shift and the correlation information read from the storage unit 103. Therefore, upon receiving the mean value of the vertical shift from the noise removal unit 105, the parallax error estimation unit 106 reads correlation information between the parallax error and the vertical shift from the storage unit 103. The parallax error estimation unit 106 reads the reference parallax error and the reference vertical shift from the storage unit 103, calculates the δ vertical shift based on the mean value of the vertical shift received from the noise removal unit 105, and then calculates the δ parallax error.

Then, based on the reference vertical shift and the vertical shift read from the storage unit (storage unit 103), the parallax error estimation unit (parallax error estimation unit 106) calculates the δ vertical shift, which is a change amount in the vertical shift caused by the refractile body (windshield 22) actually attached to the vehicle (vehicle 20). Next, based on the calculated δ vertical shift and the correlation information read from the storage unit (storage unit 103), the parallax error estimation unit (parallax error estimation unit 106) calculates a δ parallax error, which is a change amount in the parallax error caused by the refractile body (windshield 22) actually attached to the vehicle (vehicle 20). Then, the parallax error estimation unit 106 transmits the estimated δ parallax error to the distance calculation unit 107.

The parallax error estimation unit 106 transmits the δ parallax error and δ vertical shift that are calculated to the storage unit 103, and saves the δ parallax error and δ vertical shift in the storage unit 103. As described above, the δ parallax error and the δ vertical shift represent the change amounts before and after attachment of the windshield 22 to the vehicle 20. That is, the change amount with respect to the reference parallax error after shipment of the plurality of cameras (stereo cameras 21) is the δ parallax error, and the change amount with respect to the reference vertical shift is the δ vertical shift. The δ vertical shift and the δ parallax error and details will be described later with reference to FIGS. 8 and 9.

When the stereo camera device 10 has a configuration not provided with the noise removal unit 105, the parallax error estimation unit (parallax error estimation unit 106) accumulates, for a plurality of times, the vertical shift obtained by the matching unit 104 at the same position of a plurality of images captured at different timings, and calculates the mean value of the vertical shift. Then, the parallax error estimation unit (parallax error estimation unit 106) estimates the parallax error based on the mean value of the vertical shift and the correlation information. By calculating the mean value of the vertical shift in this manner, when the vertical shift calculated only once is an outlier, the parallax error estimated by this vertical shift can be prevented from becoming too large.

The distance calculation unit 107 is connected to the storage unit 103 and the parallax error estimation unit 106. The distance calculation unit (distance calculation unit 107) corrects the parallax of the plurality of matched images using the parallax error. At this time, the distance calculation unit (distance calculation unit 107) corrects the parallax using the reference parallax error and the δ parallax error. Then, the distance calculation unit 107 receives the δ parallax error from the parallax error estimation unit 106, and receives the parallax and the reference parallax error from the storage unit 103. Then, the distance calculation unit 107 performs parallax correction of removing the reference parallax error and the δ parallax error from the parallax. The distance calculation unit (distance calculation unit 107) calculates the distance from the vehicle (vehicle 20) to the object in the outside using the parallax corrected using the parallax error. Thereafter, the distance calculation unit 107 transmits, to the control unit 108, distance information including the distance calculated for each object.

The control unit 108 is connected to the distance calculation unit 107. Upon receiving the distance information from the distance calculation unit 107, the control unit 108 performs automatic control such as issuing a warning to alert the driver or applying a brake depending on the distance for each object.

The functional blocks up to the functional blocks 100 to 106 described above are responsible for the process performed before the vehicle travels, and the process is performed, for example, by the dealer of the vehicle. On the other hand, the functional blocks 100 to 108 are responsible for the process performed during traveling of the vehicle.

### <Hardware Configuration Example of Computer>

Next, a hardware configuration example of a computer 50 constituting the stereo camera device 10 will be described.

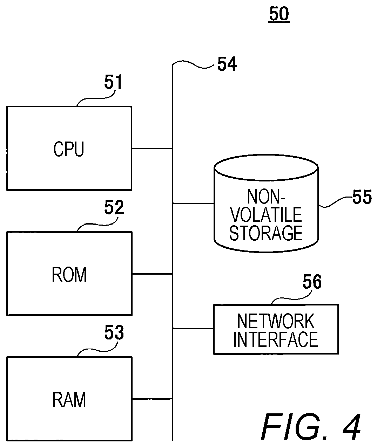

FIG. 4 is a block diagram illustrating a hardware configuration example of the computer 50. The computer 50 is an example of hardware used as a computer operable as the stereo camera device 10 according to the present embodiment. The stereo camera device 10 according to the present embodiment achieves a parallax error correction method performed by the respective functional blocks illustrated in FIG. 3 in cooperation with each other by the computer 50 (computer) executing programs.

The computer 50 includes a central processing unit (CPU) 51, a read only memory (ROM) 52, and a random access memory (RAM) 53 each connected to a bus 54. The computer 50 further includes a nonvolatile storage 55 and a network interface 56.

The CPU 51 reads, from the ROM 52, loads, to the RAM 53, and executes a program code of software for implementing each function according to the present embodiment. Variables, parameters, and the like generated in the middle of arithmetic processing of the CPU 51 are temporarily written to the RAM 53, and these variables, parameters, and the like are appropriately read by the CPU 51. However, the CPU 51 and a graphics processing unit (GPU) may be used in combination. The functions of the functional blocks 100 to 107 illustrated in FIG. 3 are implemented by the CPU 51.

As the nonvolatile storage 55, for example, a hard disk drive (HDD), a solid state drive (SSD), a flexible disk, an optical disk, a magneto-optical disk, a CD-ROM, a CD-R, a magnetic tape, a nonvolatile memory, or the like is used. In addition to an operating system (OS) and various parameters, programs for causing the computer 50 to function are recorded in this nonvolatile storage 55. The ROM 52 and the nonvolatile storage 55 record programs, data, and the like necessary for the operation of the CPU 51, and are used as an example of a computer-readable non-transitory storage medium storing programs executed by the computer 50. The functions of the storage unit 103 illustrated in FIG. 3 are implemented by the RAM 53, but may be implemented by the nonvolatile storage 55.

For example, a network interface card (NIC) or the like is used as the network interface 56, and various data can be transmitted and received between devices via an in-vehicle local area network (LAN) connected to a terminal of the NIC, a dedicated line, or the like.

Here, a known problem will be quantitatively described.

FIG. 5 is a view illustrating an example of a simulation result of a parallax error calculated when the windshield is placed between the stereo camera and the subject. In FIG. 5, the vertical axis represents the parallax error [pixels], and the horizontal axis represents the horizontal angle of view [degrees] of the stereo camera. Note that the calculation conditions in the simulation process of the parallax error are as follows. The allowable value of the parallax error is assumed to be 0.25 pixels.

### <Calculation Conditions (Design Conditions)>

· Lens Focal Length: 5.41 mm
· Lens Projection: ftanθ
· Glass Curvature Radius (Horizontal): 5.5 m
· Glass Curvature Radius (Vertical): 3.5 m
· Glass Refractive Index: 1.52
· Glass Thickness: 4.7 mm
· Glass Inclination: 30 degrees
· Sensor Pixel Pitch: 2.25 µm
· Camera Baseline Length: 180 mm
· Lens-Glass Distance: 40 mm

As illustrated in FIG. 5, for example, when the horizontal angle of view exceeds 70 degrees (left 35 degrees + right 35 degrees), the parallax error exceeds 0.25 pixels, which is an allowable value. Therefore, as disclosed in PTL 1, it is also conceivable to correct the image based on the design shape of the windshield.

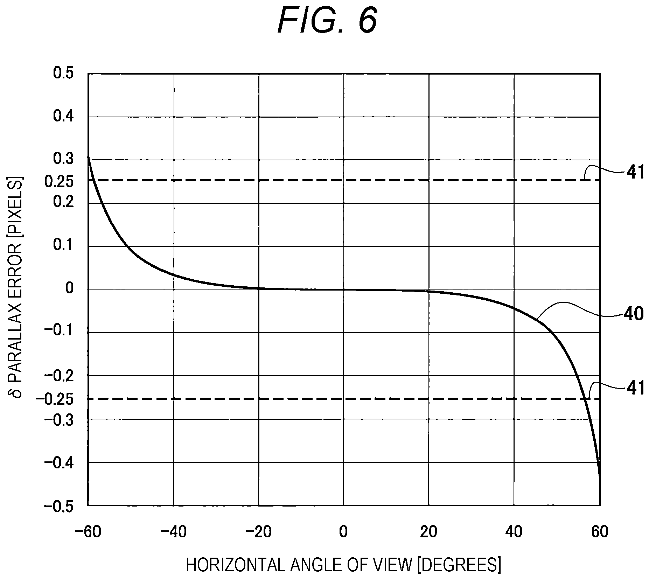

FIG. 6 is a graph showing an example of the δ parallax error with respect to the horizontal angle of view of the stereo camera. The shift with respect to a parallax in a horizontal direction obtained from the above-described design condition is called "δ parallax error". In FIG. 6, the vertical axis represents the δ parallax error [pixels], and the horizontal axis represents the horizontal angle of view [degrees]. In the drawing, an allowable value 41 having the δ parallax errors of -0.25 pixels and +0.25 pixels is indicated by a broken line.

A graph 40 shown in FIG. 6 shows a simulation result of the change amount in the parallax error illustrated in FIG. 5, which is calculated when the stereo camera is rotated by 3 degrees in the yaw direction in order to represent the variation in the attachment attitude of the stereo camera. The result shown in FIG. 6 indicates that even if the image is corrected by the technique disclosed in PTL 1, if a variation occurs in the attachment attitude of the stereo camera, the δ parallax error cannot satisfy the allowable range of ±0.25 pixels represented by the allowable value 41. This is a problem specific to the image capturing unit 100 that captures an image of the outside with a wide angle of view as that of a stereo camera.

On the other hand, in the calibration method according to the present embodiment, the parallax error (in the following description, called "reference parallax error") at the design value of the windshield and the δ parallax error due to the variation in the attachment attitude of the stereo camera are separately calculated. Thereafter, the parallax is corrected using the δ parallax error, whereby highly accurate calibration can be achieved. Therefore, details of the calibration method according to the present embodiment will be described.

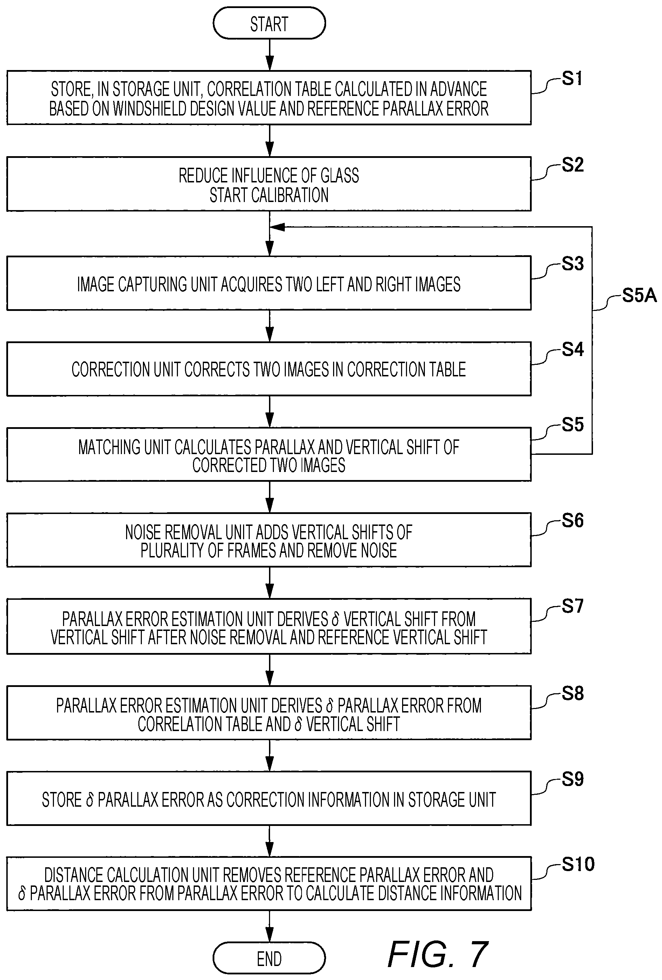

FIG. 7 is a flowchart showing an example of the calibration method according to the present embodiment. Here, the process performed in each functional block illustrated in FIG. 3 will be described with an example in which the stereo camera 21 of FIG. 2 captures the subject 24.

Before the calibration according to the present embodiment is performed, correlation information between the parallax error and the vertical shift is calculated using an external calculation device based on the attachment attitude of the stereo camera 21, the attachment attitude and the design value of the shape of the windshield 22, and the reference parallax error in accordance with the vehicle type. Then, the external input unit 101 stores, in the storage unit 103, a correlation table (see FIG. 11 described later) in which correlation information between the parallax error and the vertical shift is recorded (S1). In step S1, the external input unit 101 stores, in the storage unit 103, also the reference vertical shift and the reference parallax error, which are design values corresponding to the vehicle type.

Next, the stereo camera device 10 starts calibration for reducing the influence of the windshield 22 on the parallax between the two images captured by the stereo camera 21 (S2). Then, the stereo camera device 10 activates the stereo camera 21 of the image capturing unit 100.

Next, the image capturing unit 100 performs image acquisition processing of acquiring left and right two images (S3). At this time, the image capturing unit 100 acquires two images in which the left camera 21L and the right camera 21R capture the same subject 24 or landscape. In the following description, the two images captured by the left camera 21L and the right camera 21R are also called "left and right images".

Next, the correction unit 102 performs correction processing of correcting the two images acquired from the image capturing unit 100 using the correction table (correction table obtained by the aiming in plant) read from the storage unit 103 (S4).

Next, the matching unit 104 performs matching processing of calculating the parallax and the vertical shift of the two images corrected by the correction unit 102 (S5). Here, the matching unit 104 performs horizontal stereo matching on the corrected left and right two images and calculates the parallax. The matching unit 104 calculates the vertical shift by vertical matching of the right and left images. Then, the matching unit 104 stores the calculated parallax and vertical shift in the storage unit 103.

Thereafter, the processing of steps S3 to S5 is repeatedly performed (S5A). The matching unit 104 stores, in the storage unit 103, the vertical shift of the plurality of frames calculated by the repetitive processing. The repetitive processing in step S5A is performed as many times as the number of frames necessary for adding the vertical shift in step S6 described later.

Next, the noise removal unit 105 performs processing of adding the vertical shift of the plurality of frames read from the storage unit 103 and removing noise (S6). Therefore, the noise removal unit 105 reads, from the storage unit 103, the vertical shift of the plurality of frames, which has been repeatedly processed in steps S3 to S5 and stored in the storage unit 103. The noise removal unit 105 applies a filter before performing the addition processing on the vertical shift and removes an invalid vertical shift that becomes noise of the calculation result. Then, the noise removal unit 105 adds the plurality of vertical shifts from which the invalid vertical shift has been removed and calculates a mean value of the vertical shift.

Next, the parallax error estimation unit 106 performs processing of calculating the δ vertical shift by using the vertical shift from which the noise has been removed by the noise removal unit 105 and the reference vertical shift read from the storage unit 103 (S7). Next, the parallax error estimation unit 106 performs processing of calculating the δ parallax error from the δ vertical shift using the correlation table in which the correlation information between the parallax error and the vertical shift is recorded (S8). Next, the parallax error estimation unit 106 stores the calculated δ parallax error in the storage unit 103 as correction information (S9).

Then, the distance calculation unit 107 performs processing of correcting the parallax by removing the reference parallax error and the δ parallax error from the parallax read from the storage unit 103, and then calculating distance information to the image capturing object using the corrected parallax (S10). Then, the calibration process shown in FIG. 7 ends.

Note that the distance information to the image capturing object is output to the control unit 108 after the end of the present process. Then, the control unit 108 recognizes the outside based on the distance information and controls autonomous driving such as avoiding the vehicle from an obstacle ahead.

FIG. 8 is a view illustrating an example of horizontal stereo matching of left and right images. Here, each of the left camera 21L and the right camera 21R constituting the stereo camera 21 captures the subject 24. In the following description, the windshield 22 is abbreviated as "glass".

The upper side of FIG. 8 indicates an image PL in which the left camera 21L captures the subject 24, and the lower side of FIG. 8 indicates an image PR in which the right camera 21R captures the subject 24. An image PL1 is an image of the subject 24 captured by the left camera 21L in a state of being without the glass. An image PR1 is an image of the subject 24 captured by the right camera 21R in a state of being without the glass. A parallax DPX is a true value of a parallax (horizontal shift) calculated by horizontal stereo matching between the image PL1 and the image PR1 captured not through the glass. The parallax DPX is expressed as "Dx" in the expression described below. Glass in a state where the glass is attached with the vehicle at a design position is called "glass (design value)".

An image PL2 is an image obtained by the left camera 21L capturing the subject 24 through the glass in a case where there is the glass (design value). An image PR2 is an image obtained by the right camera 21R capturing the subject 24 through the glass in a case where there is the glass (design value). The image PL2 is shifted to the lower right with respect to the image PL1, and the image PR2 is shifted to the lower right with respect to the image PR1.

A pixel shift LS1 indicates a parallax error, with respect to the image PL1, of the image PL2 captured by the left camera 21L through the glass (design value). A pixel shift RS1 indicates a parallax error, with respect to the image PR1, of the image PR2 captured by the right camera 21R through the glass (design value). Therefore, when horizontal stereo matching is performed on the image PL2 and the image PR2, a parallax DPXE1 is generated. The parallax DPXE1 represents a parallax error caused by the influence of the glass (design value).

Here, when the parallax DPXE1 in the case where there is the glass (design value) is expressed by "DEx" in the expression and the reference parallax error is expressed by "εx", which is a parallax error caused by the influence of the glass (design value), an expression of "DEx = Dx + εx" is obtained.

That is, the parallax DEx in the case where there is the glass (design value) is a value in which the parallax true value Dx and the reference parallax error εx caused by the influence of the glass (design value) are added.

Here, the case where there is the glass (design value) is an ideal state. In practice, the attachment attitude of the camera with respect to the glass (design value) varies, or the attachment attitude and shape of the glass vary. Here, glass in a state where the glass is actually attached to the vehicle is called "glass (actual value)". FIG. 8 illustrates an image PL3 captured by the left camera 21L through the glass (actual value) and an image PR3 captured by the right camera 21R through the glass (actual value). The image PL3 is shifted to the lower right with respect to the image PL2, and the image PR3 is shifted to the lower right with respect to the image PR2.

A pixel shift LS2 indicates a parallax error, with respect to the image PL2, of the image PL3 captured by the left camera 21L through the glass (actual value). A pixel shift RS2 indicates a parallax error, with respect to the image PR2, of the image PR3 captured by the right camera 21R through the glass (actual value). Therefore, when horizontal stereo matching is performed on the image PL3 and the image PR3, a parallax DPXE2 is generated. The parallax DPXE2 represents a parallax error caused by the influence of the glass (actual value).

Here, when the parallax DPXE2 in the case where there is the glass (actual value) is expressed by "DE'x" in the expression and the δ parallax error caused by the variation of the glass and the camera with respect to the design value is expressed by "δεx", an expression of "DE'x = Dx + εx + δεx" is obtained.

That is, the shift DE'x in the case where there is the glass (actual value) is a value in which the above-described parallax true value Dx, the reference parallax error εx caused by the influence of the glass (design value), and the δ parallax error δεx are added. That is, an expression of (parallax) = (parallax true value) + (reference parallax error) + (δ parallax error) is obtained. Note that the δ parallax error δεx may be a negative value.

FIG. 9 is a view illustrating an example of vertical matching between left and right images.

The left side of FIG. 9 illustrates the image PL in which the left camera 21L captures the subject 24, and the right side of FIG. 9 illustrates the image PR in which the right camera 21R captures the subject 24. The images PL1, PL2, and PL3 illustrated in the image PL, the pixel shifts LS1 and LS2, the images PR1, PR2, and PR3 illustrated in the image PR, and the pixel shifts RS1 and RS2 are as described with reference to FIG. 8.

Vertical shift DPY is a true value of the vertical shift calculated by stereo matching in the vertical direction between the image PL1 and the image PR1 captured not through the glass. The vertical shift DPY is expressed as "Dy" in the expression. The true value of the vertical shift when there is no glass is adjusted at the time of shipment of the stereo camera 21. Therefore, the true value of the vertical shift of the left camera 21L and the left camera 21L becomes zero, and is expressed by an expression of Dy = 0.

On the other hand, when there is the glass (design value), the positions of light rays incident through the glass (design value) are different between the left camera 21L and the right camera 21R. For this reason, the pixel shift LS1 in the vertical direction of the image captured by the left camera 21L is different from the pixel shift RS1 in the vertical direction of the image captured by the right camera 21R. Therefore, in a case where there is the glass (design value), when vertical stereo matching is performed on the image PL2 and the image PR2, vertical shift DPYE1 occurs. That is, the vertical shift DPYE1 represents the vertical shift caused by the influence of the glass (design value).

Here, when the vertical shift DPYE1 in the case where there is the glass (design value) is expressed by "DEy" in the expression and the reference vertical shift is expressed by "εy", which is a vertical shift caused by the influence of the glass (design value), an expression of "DEy = εy" is obtained because of Dy = 0.

That is, the vertical shift DEy in the case where there is the glass (design value) is a value in which the vertical shift true value Dy (= 0) and the reference vertical shift εy caused by the influence of the glass (design value) are added.

As illustrated with reference to FIG. 8, the case where there is the glass (design value) is an ideal state. FIG. 9 illustrates the image PL3 captured by the left camera 21L through the glass (actual value) and the image PR3 captured by the right camera 21R through the glass (actual value).

The pixel shift LS2 indicates a vertical shift, with respect to the image PL2, of the image PL3 captured by the left camera 21L through the glass (actual value). The pixel shift RS2 indicates a vertical shift, with respect to the image PR2, of the image PR3 captured by the right camera 21R through the glass (actual value). Therefore, when vertical stereo matching is performed on the image PL3 and the image PR3, vertical shift DPYE2 occurs. Vertical shift DPYE2 represents a vertical shift value of the vertical shift caused by the influence of the glass (actual value).

Here, when the vertical shift DPYE2 in the case where there is the glass (actual value) is represented by "DE'y" in the expression and the δ vertical shift caused by the variation of the glass and the camera with respect to the design value is represented by "δεy", an expression of "DE'y = εy + δεy" is obtained.

That is, the vertical shift DE'y in the case where there is the glass (actual value) is a value in which the vertical shift true value Dy (= 0), the reference vertical shift εy caused by the influence of the glass (design value), and the δ vertical shift are added. That is, an expression of (vertical shift) = (reference vertical shift) + (δ vertical shift) is obtained. Note that the δ vertical shift (δεy) may be a negative value.

The value of DE'x in the horizontal direction varies depending on the distance from the camera to the subject 24. For this reason, measurement under a predetermined condition such as a known distance to the object, for example, has been required.

On the other hand, the stereo camera device 10 according to the present embodiment is characterized in using not the shift in the horizontal direction but the shift in the vertical direction that does not depend on the distance. Since the vertical shift is zero when there is no glass, the vertical shift does not change even if the distance to the subject 24 varies, and the same shift amount is obtained. For this reason, the stereo camera device 10 can directly calculate the vertical shift, and can calculate the parallax error using the vertical shift.

Next, a calculation procedure of the parallax error will be described.

FIG. 10 is a schematic diagram illustrating an example of the calculation procedure of the parallax error according to the present embodiment.

### (1) Image Capturing of Landscape 1001

First, the stereo camera 21 captures a landscape 1001 through the windshield 22. At this time, the processing of steps S3 to S5 in FIG. 7 is performed.

### (2) Vertical Stereo Matching

Next, the matching unit 104 performs stereo matching in the vertical direction of the two images captured by the left and right cameras, and detects vertical shift 10DPY. At this time, the processing of step S5 in FIG. 7 is performed. Here, the vertical shift in the image is represented by an arrow in the vertical direction in the vertical shift 10DPY. The orientation of each arrow represents the direction of the vertical shift, and the length represents the shift amount of the vertical shift.

### (3) Calculation of Parallax Error

Then, the parallax error estimation unit 106 estimates a horizontal parallax error 10DPX. Here, the parallax error in the image is represented by a horizontal arrow in the parallax error 10DPX. The orientation of each arrow represents the direction of the parallax error, and the length represents the shift amount of the parallax error.

One arrow of the parallax error 10DPX located at the same position as one arrow of the vertical shift 10DPY has a correlation. The correlation between these arrows is stored in the correlation table of the storage unit 103 as correlation information c1 and c2. Note that as indicated by the correlation information c1 and c2, the shift amount of the vertical shift and the shift amount of the parallax error are not much different near the middle of the image. However, on the lower side where the curvature of the windshield 22 increases, the shift amount of the parallax error increases with respect to the shift amount of the vertical shift. Therefore, a plurality of correlations are stored in the storage unit 103 as correlation information. As described later, the correlation between the vertical shift and the parallax error can be used as the correlation between the δ vertical shift and the δ parallax error. Based on the correlation information including the plurality of correlations read from the storage unit 103, the parallax error estimation unit 106 can estimate the δ parallax error from the δ vertical shift.

Note that in a case where the windshield 22 includes a part of a spherical surface, it is expected that the correlation between the vertical shift and the parallax error is constant in the entire windshield 22. In this case, one correlation is stored in the storage unit 103 as correlation information. Then, the parallax error estimation unit 106 can estimate the δ parallax error from the δ vertical shift based on the correlation information including one correlation read from the storage unit 103.

As described above, if being able to calculate the δ vertical shift, the parallax error estimation unit 106 can estimate the δ parallax error at each angle of view indicated by the parallax error 10DPX. At this time, the processing of steps S6 to S8 in FIG. 7 is performed.

FIG. 11 is a configuration diagram of the correlation table. The correlation table records the correlation information between the parallax error and the vertical shift.

The correlation table is represented by, for example, a table of the horizontal angle of view [degrees] and the vertical angle of view [degrees] of the stereo camera 21. Two values in which the parallax error is "e(m)" and the vertical shift is "v(n)" are stored as the correlation information in a cell where the angles of view intersect with each other. Here, "m" of the parallax error e(m) corresponds to the horizontal angle of view, and takes a value from "-60" to "+60". And, "n" of the vertical shift v(n) corresponds to the vertical angle of view, and takes a value from "-30" to "+30".

The storage unit (storage unit 103) stores, in the correlation table, a plurality of pieces of correlation information corresponding to the image capturing angle of view (horizontal angle of view and vertical angle of view) of the camera (stereo camera 21). For example, the correlation table illustrated in FIG. 11 stores correlation information in a case where the horizontal angle of view and the vertical angle of view are changed by 1 degree with the horizontal angle of view falling within a range of from -60 degrees to +60 degrees and the vertical angle falling within a range of from -30 degrees to +30 degrees. For this reason, the parallax error estimation unit 106 can easily read, from the correlation table, correlation information between the parallax error and the vertical shift at a certain horizontal angle of view and a certain vertical angle of view. Then, the parallax error estimation unit (parallax error estimation unit 106) can estimate the parallax error using the plurality of pieces of correlation information read from the storage unit (storage unit 103) in accordance with the image capturing angle of view.

Note that the correlation table may store correlation information in a case where the horizontal angle of view and the vertical angle of view are changed by 0.5 degrees, or may store correlation information in a case where the horizontal angle of view and the vertical angle of view are changed by 10 degrees.

The storage unit (the storage unit 103) may store one piece of correlation information obtained for the refractile body (windshield 22) in a case where the shape of the refractile body (windshield 22) is uniform. As long as the correlation information is the same anywhere in the horizontal angle of view and the vertical angle of view, only correlation information of one parallax error and one vertical shift may be stored in the correlation table. The parallax error estimation unit (parallax error estimation unit 106) can estimate the parallax error using one piece of correlation information read from the storage unit (storage unit 103).

Next, the reason why the parallax error estimation unit 106 can estimate the horizontal parallax error from the vertical pixel shift will be described.

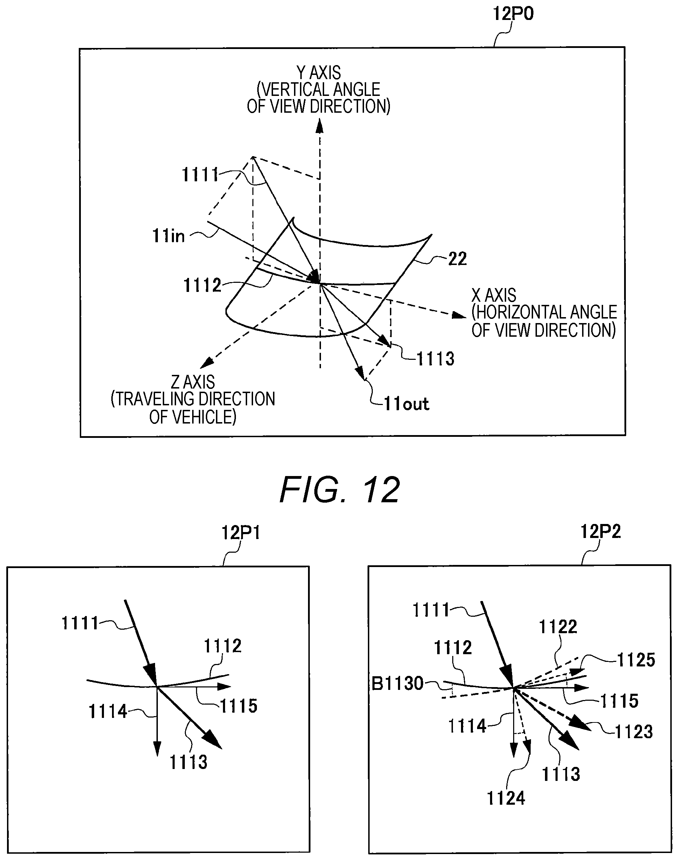

FIG. 12 is an explanatory diagram of the principle by which the parallax error estimation unit 106 estimates the parallax error from the vertical shift.

An explanatory diagram 12P0 illustrated on the upper side of FIG. 12 is a three-dimensional diagram illustrating a state in which a light ray incident on glass having no variation is emitted. Here, a scene in which a certain incident light ray 11in is incident on the windshield 22 and is emitted as an outgoing light ray 11out is illustrated. In the drawing, the X axis indicates a horizontal angle of view direction, the Y axis indicates a vertical angle of view direction, and the Z axis indicates a traveling direction of the vehicle. When the incident light ray 11in and the outgoing light ray 11out are not distinguished from each other, they are called a "light ray".

When the incident light ray 11in is projected onto an XY plane, it is expressed as an XY plane projection light ray 1111. When the outgoing light ray 11out is projected onto the XY plane, it is expressed as an XY plane projection light ray 1113. Here, a cross section 1112 is a place where the light ray hits the glass 22 is projected onto the XY plane.

Next, a case where a light ray passes through glass having no variation in attachment attitude will be described.

An explanatory diagram 12P1 illustrated on the lower left of FIG. 12 illustrates an example of a light ray projected on the XY plane illustrated in the explanatory diagram 12P0. Here, a light ray 1115 and a light ray 1114 in which the XY plane projection light ray 1113 is decomposed into the X axis and the Y axis respectively represent the amount in the horizontal direction and the amount in the vertical direction of the XY plane projection light ray 1113.

A case where a light ray passes through glass having a variation in attachment attitude will be described.

An explanatory diagram 12P2 illustrated on the lower right of FIG. 12 illustrates an example in which a light ray passing through glass having variations in attachment attitude is projected onto the XY plane illustrated in the explanatory diagram 12P0. The explanatory diagram 12P2 also illustrates a scene of displacement of the light ray changed on the cross section 1112 same as in the explanatory diagram 12P1.

For example, when the glass has a variation B1130 in a roll rotation, a cross section 1122 (solid line) in a case where there is no variation can be represented at a position changed to the cross section 1122 (broken line). An outgoing light ray 1123 (broken line) is changed from the XY plane projection light ray (solid line).

A light ray 1124 (broken line) and a light ray 1125 (broken line) represent the amount in the vertical direction and the amount in the horizontal direction, respectively, of the outgoing light rays 1123 (broken line) having been changed. A vertical difference between the light ray 1124 (broken line) and the light ray 1114 (solid line) is the δ vertical shift δεy caused by the variation of glass. A horizontal difference between the light ray 1125 (broken line) and the light ray 1115 (solid line) is the δ parallax error δεx caused by the variation of glass.

The actual variation in the attachment attitude of the glass is considerably smaller than the design value. For this reason, the ratio between a δ parallax error ε'x and a δ vertical shift ε'y in the case where there is a variation in the attachment attitude of the glass does not greatly change from the ratio between the reference parallax error εx and the reference vertical shift εy calculated with the design value of the glass.

That is, there is a relationship of |εx|/|εy| ≈ |ε'x|/|ε'y|.

For example, the correlation between the reference parallax error εx and the reference vertical shift εy obtained in advance with the design value of the glass is expressed as |εx|/|εy| = k. On the other hand, the correlation between the δ parallax error ε' x and the δ vertical shift ε' y can be expressed as |ε' x| ≈ k*|ε'y|, where the δ parallax error in the case where there is a variation in the attachment attitude of the glass is "ε'x", and the δ vertical shift is "ε'y".

That is, since |ε'x| - |εx| ≈ k*(|ε'y| - |εy|), the relationship between the δ parallax error δεx and the δ vertical shift δεy can be expressed as δεx ≈ k*δεy.

Therefore, the parallax error estimation unit 106 can estimate the actual parallax error by a calculation expression of (actual parallax error) = (reference parallax error (glass design value)) + (δ parallax error (with variation)). Here, the reference parallax error and a correlation coefficient k are values obtained by design values of glass. As described above, the δ parallax error δεx can be calculated by (δ vertical shift δεy*k).

Thus, even if there is a variation in attachment attitude of the glass, the stereo camera device 10 according to the present embodiment calculates the δ parallax error (with variation) by using the correlation between the δ vertical shift and the δ parallax error, that is, the correlation between the vertical shift and the parallax error, and corrects the parallax by using the actual parallax error, and therefore it is possible to achieve highly accurate calibration. Note that although the correlation is described as linear here, the correlation becomes nonlinear as the change amount increases. It goes without saying that this case is also effective.

Next, the correlation between the δ vertical shift and the δ parallax error when the variation in attachment attitude of the glass is taken into consideration will be confirmed. Hereinafter, examples of nine types of variations in consideration of variation conditions will be described.

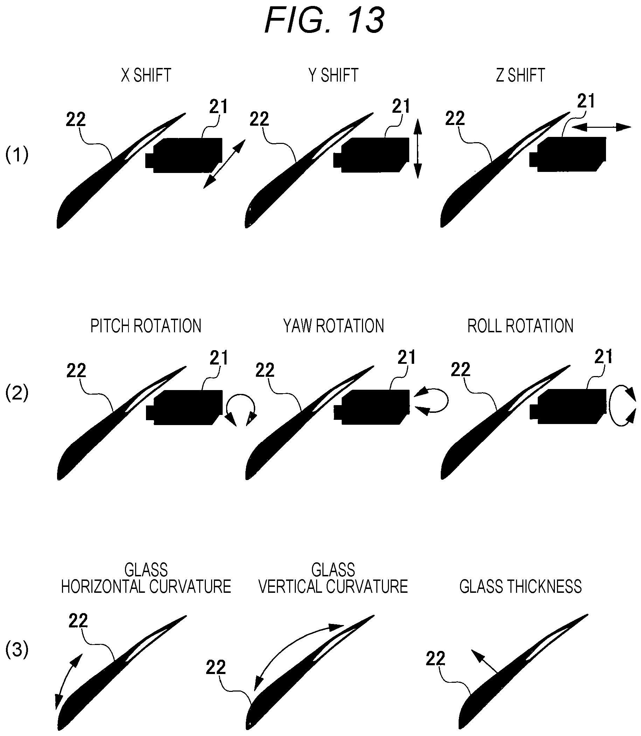

FIG. 13 is a view illustrating an example of nine types of variations. Variations (1) to (3) illustrated in FIG. 13 are based on the following calculation conditions.

### <Calculation Conditions (Variations)>

· X, Y, Z Shift: +2 mm
· Pitch, Yaw, Roll Rotation: +3 degrees
· Glass Curvature Radius (Horizontal, Vertical): -1.5 m
· Glass Thickness: +1 mm

Variation (1) in FIG. 13 illustrates an example of shift variation of the stereo camera with respect to the windshield 22. Examples of the shift in the X axis direction (X shift), the shift in the Y axis direction (Y shift), and the shift in the Z axis direction (Z shift) are illustrated in order from the left in FIG. 13.

Variation (2) in FIG. 13 illustrates an example of rotation variation of the stereo camera with respect to the windshield 22. Examples of the rotation in a pitch direction (pitch rotation), the rotation in a yaw direction (yaw rotation), and the rotation in a roll direction (roll rotation) are illustrated in order from the left in FIG. 13.

Variation (3) in FIG. 13 illustrates an example of characteristic variation of the windshield 22. Examples of the horizontal curvature of the windshield 22, the vertical curvature of the windshield 22, and the thickness of the windshield 22 are illustrated in order from the left in FIG. 13.

FIG. 14 is a view illustrating the correlation between the δ vertical shift and the δ parallax error. In FIG. 14, the horizontal axis represents the δ vertical shift, and the vertical axis represents the δ parallax error. Then, the correlation between the δ vertical shift and the δ parallax error is obtained under the following calculation conditions shown in the legend in FIG. 14.

### <Calculation Conditions>

· Side-to-Side Translation (X Axis): +2 mm
· Up-and-Down Translation (Y Axis): +2 mm
· Back-and-Forth Translation (Z Axis): +2 mm
· Pitch Angle (X Axis Rotation): +3 Degrees
· Yaw Angle (Y Axis Rotation): +3 Degrees
· Roll Angle (Z Axis Rotation): +3 Degrees
· Horizontal Curvature Radius: -1500 mm
· Vertical Curvature Radius: -1500 mm
· Thickness: +0.2 mm

Here, the correlation between the δ vertical shift and the δ parallax error is obtained by calculating the δ vertical shift and the δ parallax error when the stereo camera device 10 detects the subject 24 that is 50 m ahead. A graph RT20 on the upper side of FIG. 14 shows a correlation between the δ vertical shift and the δ parallax error at a horizontal angle of view of 20 degrees. A graph RT40 on the middle side of FIG. 14 shows a correlation between the δ vertical shift and the δ parallax error at a horizontal angle of view of 40 degrees. A graph RT60 on the lower side of FIG. 14 shows a correlation between the δ vertical shift and the δ parallax error at a horizontal angle of view of 60 degrees.

As illustrated in the graphs RT20, RT40, and RT60, it can be found that there is a high correlation between the δ vertical shift and the δ parallax error. The δ parallax error shifts with respect to the variation of the windshield 22, but the δ vertical shift also changes along with the shift of the δ parallax error. Therefore, it can be found that the δ parallax error can be obtained by calculating the δ vertical shift.

It can also be found that the correlation coefficient k representing the correlation between the δ vertical shift and the δ parallax error varies depending on the broadness of the horizontal angle of view. For example, when the horizontal angle of view is 60 degrees, the correlation coefficient k is substantially "+1". As the horizontal angle of view changes to 40 degrees and to 20 degrees, the correlation coefficient k takes values smaller than "+ 1". Therefore, in order to perform highly accurate calibration, it is desirable to use a different correlation coefficient k for each horizontal angle of view of the stereo camera 21.

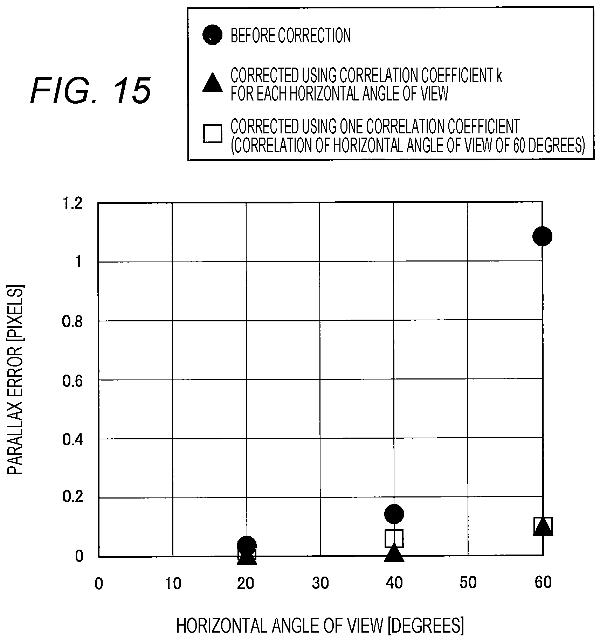

FIG. 15 illustrates a correction effect under a combined condition in which all the calculation conditions (variations) illustrated in FIG. 14 are taken into consideration. FIG. 15 illustrates simulation results of parallax errors obtained at horizontal angles of view of 20 degrees, 40 degrees, and 60 degrees. Here, parallax errors before correction are indicated by black circles, parallax errors corrected using the correlation coefficient k for each horizontal angle of view are indicated by black triangles, and parallax errors corrected using one correlation coefficient at a horizontal angle of view of 60 degrees are indicated by white squares.

It can be found that the parallax error corrected using one correlation coefficient at the horizontal angle of view of 60 degrees is larger than 0 pixels at the horizontal angles of view of 40 degrees and 60 degrees. On the other hand, the parallax error corrected using the correlation coefficient k for each horizontal angle of view according to the present embodiment is substantially 0 pixels even when the horizontal angle of view is 40 degrees. However, when the horizontal angle of view is 60 degrees, the corrected parallax error is about 0.5 pixels.

Thus, it can be found that the parallax error can be significantly reduced by performing the correction according to the present embodiment. It is found that a residual parallax error can be reduced by correcting with the correlation coefficient k for each horizontal angle of view, but even with the correlation coefficient k at the horizontal angle of view of 60 degrees, a sufficient effect can be obtained as compared with that the parallax error before correction exceeds 1 pixel.

The stereo camera device 10 according to one embodiment described above separately calculates the reference parallax error calculated by the design value of the windshield 22 and the δ parallax error due to the variation of the windshield 22. Therefore, the stereo camera device 10 can highly accurately correct (calibrate) the parallax of the stereo camera 21 having a wide angle of view even without the calibration chart. For example, the stereo camera device 10 can correct the parallax of the stereo camera 21 with high accuracy even if there are manufacturing variations in the curvature radii in the horizontal and vertical directions of the windshield 22 or variations in the relative value relationship between the windshield 22 and the stereo camera 21.

For example, when the windshield 22 is replaced at a maintenance plant of a dealer, even if there are variations in characteristics such as the attachment attitude of the stereo camera 21 and the attachment attitude and shape of the windshield 22, high distance measurement accuracy can be obtained by performing calibration according to the present embodiment.

The method according to the present embodiment does not require a large chart for calibration. Therefore, it is possible to perform calibration even with an image of a landscape on a road, and it is also possible to correct the influence of the windshield 22 even when the vehicle 20 is traveling.

The user can use calibration for correcting the influence of the windshield 22 with the stereo camera 21 while the vehicle 20 is stopped or traveling. For example, in a calibration mode, the stereo camera 21 performs correction in real time while the vehicle 20 is stopped or traveling. Here, calibration during traveling of the vehicle 20 is performed with the flowchart shown in FIG. 7, and a large number of vertical shifts are accumulated using images of a plurality of frames acquired during traveling. For example, the vertical shift is accumulated based on a change in a landscape appearing in an image captured when the vehicle 20 is traveling or stopped.

For example, after a landscape is captured in a state where the vehicle 20 is stopped in a certain direction, the vehicle 20 is stopped in another direction, and the landscape is captured in that direction, whereby the vertical shift based on the change in the landscape may be accumulated. For example, the stereo camera device 10 acquires left and right images of the same subject 100 times, performs stereo matching for 100 times, accumulates vertical shifts for 100 times, for example, and takes a mean value. Then, the parallax error estimation unit 106 estimates the parallax error using the correlation table from the vertical shift, and the distance calculation unit 107 performs calibration for removing the parallax error from the parallax.

Note that the landscape 1001 illustrated in FIG. 10 is not limited to a landscape and may be a person, an animal, or the like. For example, any place where a parallax such as a chart on a road surface can be acquired may be used.

The repetitive processing (S5A) as in steps S3 to S5 shown in FIG. 7 is not limited to accumulation of the vertical shift. For example, a process of obtaining a plurality of the δ parallax errors and correcting the parallax for a plurality of times may be performed. In order to increase the parallax correction accuracy, other parameters may be accumulated.

While the invention made by the present inventor has been specifically described above based on the embodiment, the present invention is not limited to the above embodiment, and it goes without saying that various modifications can be made. For example, the present invention can be applied to calibration in plants and can correct a parallax without using a chart. Even in a case where calibration is performed using a chart in a plant, a chart having a narrow chart width as compared with known calibration may be used, and remodeling of the plant, preparation of the installation space for a large chart, and the like are no longer necessary.

The stereo camera device 10 can correct the influence on the glass even when the vehicle 20 is traveling. Since the calibration can be performed even while the vehicle 20 is traveling, it is possible to appropriately correct the parallax error even when the attachment attitude of the stereo camera 21 is shifted due to vibration of the vehicle 20.

As long as the stereo camera 21 is provided in the vehicle interior of the vehicle 20, the stereo camera 21 may be installed on the vehicle interior side of the rear glass. In this case, the stereo camera device 10 can also correct the parallax from a plurality of images obtained by the stereo camera 21 capturing the outside behind the vehicle 20 and calculate the distance to the object in the outside behind the vehicle 20.

In the above-described embodiment, it has been described that the stereo camera 21 is installed on the vehicle interior side of the windshield 22 as an example of the refractile body, but a transparent organic compound such as transparent plastic may be used as the refractile body other than the glass.

Thus, the present invention is not limited to the above-described embodiment, and it goes without saying that various other application examples and modifications can be made without departing from the gist of the present invention described in the claims.

For the purpose of facilitating understanding of the invention, the position, size, shape, range, and the like of each component illustrated in the drawings do not necessarily represent the actual position, size, shape, range, and the like. Therefore, the present invention is not necessarily limited to the position, size, shape, range, and the like disclosed in the drawings. The embodiment described below is described with the system configuration in detail and specifically, in order to describe the present invention in an easy-to-understand manner, and the present invention is not necessarily limited to those including all the constituent elements described above. Another configuration can also be added to, deleted from, or replaced with a part of the configuration of the present embodiment.

For control lines and information lines, those considered necessary for explanation are illustrated, and not necessarily all the control lines and information lines in the product are illustrated. In reality, almost all the configurations may be considered as being mutually connected. Reference Signs List

- 10: stereo camera device
- 20: vehicle
- 21: stereo camera
- 22: windshield
- 100: image capturing unit
- 101: external input unit
- 102: correction unit
- 103: storage unit
- 104: matching unit
- 105: noise removal unit
- 106: parallax error estimation unit
- 107: distance calculation unit
- 108: control unit

## Claims

1. A stereo camera device, comprising:
a storage unit that stores correlation information of a parallax error in a horizontal direction with respect to a vertical shift of a plurality of images respectively captured by a plurality of cameras through a refractile body that refracts light, the correlation information being obtained based on a refractile body characteristic including an attitude of the refractile body attached to a vehicle and a shape of the refractile body, and attitudes of the plurality of cameras arranged in the vehicle;
a matching unit that matches the plurality of images obtained by the plurality of cameras capturing a same subject to obtain a vertical shift of the plurality of images;
a parallax error estimation unit that estimates a parallax error of the plurality of images having been matched based on the vertical shift and the correlation information; and
a distance calculation unit that corrects, using the parallax error, a parallax of the image having been matched.

2. The stereo camera device according to claim 1, wherein
the storage unit stores a plurality of pieces of the correlation information in accordance with an image capturing angle of view of the camera, and
the parallax error estimation unit estimates the parallax error using the plurality of pieces of correlation information read from the storage unit in accordance with the image capturing angle of view of the camera.

3. The stereo camera device according to claim 1, wherein
the storage unit stores one piece of the correlation information obtained for the refractile body when the refractile body has a uniform shape, and
the parallax error estimation unit estimates the parallax error using the one piece of correlation information read from the storage unit.

4. The stereo camera device according to claim 2, wherein the parallax error estimation unit calculates a mean value of the vertical shift by accumulating, a plurality of times, the vertical shift obtained by the matching unit at a same position of the plurality of images captured at different timings, and estimates the parallax error based on the mean value of the vertical shift and the correlation information.

5. The stereo camera device according to claim 3, wherein
the storage unit stores a reference parallax error and a reference vertical shift that are calculated in advance with a design value of the refractile body,
the parallax error estimation unit calculates a δ vertical shift, which is a change amount in the vertical shift caused by the refractile body actually attached to the vehicle, based on the reference vertical shift and the vertical shift read from the storage unit, and calculates a δ parallax error, which is a change amount in the parallax error caused by the refractile body actually attached to the vehicle, based on the δ vertical shift and the correlation information read from the storage unit, and
the distance calculation unit corrects the parallax using the reference parallax error and the δ parallax error.

6. The stereo camera device according to claim 5, wherein
the reference parallax error and the reference vertical shift are stored in the storage unit upon shipment of the plurality of cameras, and
a change amount with respect to the reference parallax error after shipment of the plurality of cameras is the δ parallax error, and a change amount with respect to the reference vertical shift is the δ vertical shift.

7. The stereo camera device according to claim 5, wherein
the reference parallax error and the reference vertical shift are stored in the storage unit before the refractile body is attached to the vehicle, and
a change amount with respect to the reference parallax error after the refractile body is actually attached to the vehicle is the δ parallax error, and a change amount with respect to the reference vertical shift is the δ vertical shift.

8. The stereo camera device according to claim 2, wherein the distance calculation unit calculates a distance from the vehicle to an external object using the parallax corrected using the parallax error.

9. A calibration method, comprising:
a process of acquiring a plurality of images respectively captured by a plurality of cameras arranged in a vehicle through a refractile body attached to the vehicle and refracting light;
a process of matching the plurality of images obtained by the plurality of cameras capturing a same subject to obtain a vertical shift of the plurality of images;
a process of estimating a parallax error of the image that is matched based on correlation information of a parallax error in a horizontal direction with respect to the vertical shift of the plurality of the images obtained based on a refractile body characteristic including an attitude of the refractile body and a shape of the refractile body and attitudes of the plurality of cameras, and the vertical shift; and
a process of correcting, using the parallax error, a parallax of the image having been matched.
